(19) Europäisches Patentamt
European Patent Office
Office européen des brevets

(11) EP 3 368 642 B1

(12) **EUROPEAN PATENT SPECIFICATION**

(45) Date of publication and mention of the grant of the patent:
**17.02.2021 Bulletin 2021/07**

(51) Int Cl.:
*C10L 5/04* (2006.01)  *C10L 5/32* (2006.01)
*C23F 11/10* (2006.01)  *C22B 1/14* (2006.01)
*C22B 1/245* (2006.01)  *C09K 3/18* (2006.01)
*C04B 20/10* (2006.01)  *B65G 3/02* (2006.01)
*C10L 9/10* (2006.01)

(21) Application number: **16816422.6**

(22) Date of filing: **28.10.2016**

(86) International application number:
**PCT/NL2016/050755**

(87) International publication number:
**WO 2017/074194 (04.05.2017 Gazette 2017/18)**

(54) **A METHOD OF PERFORMING A TREATMENT OF A PARTICULATE RAW MATERIAL**

VERFAHREN ZUR DURCHFÜHRUNG EINER BEHANDLUNG EINES PARTIKELFÖRMIGEN ROHMATERIALS

PROCÉDÉ DE MISE EN OEUVRE DU TRAITEMENT D'UNE MATIÈRE PREMIÈRE PARTICULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2015 NL 2015703**

(43) Date of publication of application:
**05.09.2018 Bulletin 2018/36**

(73) Proprietor: **Instral Holding B.V.**
**1335 NC Almere (NL)**

(72) Inventors:
• **KORVER, Jacobus Gerardus**
  **1546 LD Jisp (NL)**
• **JANBROERS, Nils**
  **1335 NC Almere (NL)**

• **DILLING, Roelof Albertus**
  **3769 KP Soesterberg (NL)**

(74) Representative: **Altenburg, Bernardus Stephanus Franciscus**
**DOGIO Patents BV**
**PO Box 2350**
**1200 CJ Hilversum (NL)**

(56) References cited:
**EP-A2- 0 199 559    WO-A1-87/05226**
**US-A- 2 204 781    US-A- 3 356 469**
**US-A- 3 527 580    US-A1- 2010 064 575**

• **DATABASE WPI Week 198441 1984 Thomson Scientific, London, GB; AN 1984-254586 XP002767323, -& JP S59 155496 A (NARITA T) 4 September 1984 (1984-09-04)**

## Description

The present invention relates to a method of performing a treatment of a particulate raw material capable of being thermally converted at a temperature of > 100°C, said treatment comprising depositing a liquid composition on the raw material, said liquid composition comprising a hydrocarbon;
wherein the liquid composition comprises paraffin

- having a carbon chain length between 18 and 70 carbon atoms, and
- a solidification point between 15 and 90°C.

Bulk raw materials in particle form such as metal ore or coal are stored for relatively long periods outside in stockpiles in the open. To prevent dust, which can be a major nuisance for the area surrounding the stockpile and also constitute a financial loss of material, it is known to put a liquid composition on top of the stockpile. The liquid composition is for example paper pulp and forms a crust on the stockpile. Another liquid composition known in the art is a solution of lignosulfonic acid salts.

US2204781 discloses a method of protecting a mass of particles according to the preamble. A pile is provided with anon-tacky weatehr resistant jacket adherent to the surface of the pile.

A problem is that moisture in the raw bulk materials leads to a waste of energy. This may, for coal or wood chips, be due to reduced heat of combustion heat because the water evaporates and the heat of evaporation of water is large. For metal ore such as iron ore, more heat is necessary to melt the ore, again to evaporate the water in the raw bulk material.

It is an object of the present invention to provide a method according to the preamble that results in improved energy efficiency when the raw material is thermally converted.

To this end, a method according to the preamble is characterized in that the paraffin comprises more than 20% by wt./wt. of iso-paraffins, and preferably more than 30% by wt./wt.

It has been found that this helps to reduce the water content relative to no treatment, and may even reduce the water content compared to the water content before treatment. The reduced water content results in a saving of energy.

It has been found that thus a longer lasting effect on the reduction of the water content is obtained. The use of iso-paraffin may also allow to reduce the amount of paraffin necessary, higher percentages being preferred.

For raw material to be deposited as a stockpile, the raw material is treated with the liquid composition in an amount of at least 1 g paraffin per $m^2$ of particle surface area, preferably in an amount of at least 3 $g/m^2$ and more preferably at least 7 $g/m^2$.

The raw material may for example wood, and more typically a mineral material such as a metal ore (iron ore, alumina, copper ore etc.), phosphate ore, coal, and limestone. The thermal conversion is in general a chemical conversion, e.g. combustion in case of coal, decomposition in case of limestone and possibly reduction in case of an ore where the ore comprises a metal oxide. The thermal conversion may also comprise a change from the solid state to the liquid state (e.g. in case the ore is already in metallic form). Thus, in the present invention, the term thermally converted includes combusted, decomposed, chemically reduced, and melted, the thermal conversion taking place at a temperature of at least 100°C. In general, the temperature will be raised by at least 200°C.

The particulate raw material may be in any form, such as granules, powder, granulate, pellets, chips, prills, and lumps, the size generally being between 10 um and 30 cm, usually between 0.1 mm and 5 cm.

WO8705226A1 discloses a method of treating coal with a hydrocarbon oil. In the examples, mention is made of a paraffinic mineral oil having a pour point of -8°C. The objective is to reduce the risk of fire due to spontaneous combustion of the coal. The surface area is said to be reduced because the oil is believed to agglomerate coal particles.

The liquid nature of an oil and/or its relatively low viscosity cause it to penetrate a coal particle and/or to block channels such as cracks through which water could leave the coal particle. In the present invention, being relatively more at the outside, transfer of paraffin to other particles is facilitated when particles more relative to each other, for example while transferring to and depositing as a stockpile. Paraffin allows water to pass, but impedes absorption of water by a particle.

According to a favourable embodiment, the solidification point of the paraffin at least 45°C.

Such a paraffin is less likely to penetrate a particle of the particulate raw material or to spread in case of an emulsion, resulting in an improved effectivity at keeping the amount of water associated with the particle low.

According to a favourable embodiment, the particulate raw material is chosen from a metal ore and coal.

These are two important areas of application of the method according to the present invention.

According to a favourable embodiment, the liquid composition is a paraffin emulsion.

The concentration of paraffin in the liquid composition will typically be between 0.1% and 60% by weight/volume. Such paraffin emulsion are commercially available or can be prepared using any suitable method known in the art. It has been found that supplying the liquid composition as a paraffin emulsion facilitates that water droplets run past the particles of the dry bulk material. However, water present in the particles may still leave the particle by evaporation, as a result of which the water content of the particles may even be reduced compared to before the treatment with the liquid composition.

According to a favourable embodiment, the particulate raw material is treated with the liquid composition while moving in a gas-dispersed state under the influence of gravity.

The particulate raw material is spread, for example using a spreader in air. Effectively the amount of the particulate material per liter will be reduced at least 2 times, preferably at least 5 times. Thus the space between the particles of the particulate raw material is increased and the liquid composition can easily access the surface of the particles. After the treatment the particulate raw material is collected using any means, such as a sieve.

According to a favourable embodiment, the particulate raw material is treated with the liquid composition while moving under the influence of gravity.

Thus the material can be treated effectively. It is preferred that the movement is a free fall so as to allow intimate contact of the particles of bulk material with the spray of the liquid composition. The particulate material may for example be passed through a chute.

According to a favourable embodiment, the raw material is a stockpile, the top surface of which is treated with the liquid composition.

This is an important area of application of the present invention. For stockpiles treated with the method according to the invention, the liquid composition will be applied in an amount of paraffine of at least 0.2 g per horizontal square meter, preferably in an amount of at least 0.6 g/m$^2$ and more preferably at least 1 g/m$^2$.

According to a favourable embodiment, the liquid composition comprises paper pulp.

Small amounts of paper pulp may be useful to make it easier to see what surface of a stockpile has already been sprayed, and/or whether the coating is gone. A suitable amount is for example at least 5 g per horizontal m$^2$. In larger amounts, the paper pul may aid in passing rain water over the stock pile. In such a case the amount applied will at least be 30 g per horizontal m$^2$, preferably at least 75 g/m$^2$. This will help to improve water flowing from the stockpile, while the risk of the paper pulp being washed away is reduced, rendering the paper pulp more effective. Paper pulp will be present in an amount of at least 0.5% by weight/vol. in the liquid composition, preferably in an amount of at least 4% by weight/vol. paraffin comprises more than 20% by wt./wt. of iso-paraffins, and preferably more than 30% by wt./wt.

It has been found that thus a longer lasting effect on the reduction of the water content is obtained. The use of iso-paraffin may also allow to reduce the amount of paraffin necessary, higher percentages being preferred.

According to a favourable embodiment, the paraffin comprises more than 65% by wt./wt. of iso-paraffins, and preferably more than 75% by wt./wt.

It has been found that a reduced n-paraffin content results in coated pellets that allow for moisture that is absorbed to evaporate again.

According to a favourable embodiment, the treatment is followed by a step of thermally converting the raw material at a temperature of > 100°C.

Thus energy is saved. The time between the treatment and the thermal conversion is in general at least 24 hours, typically at least 3 days, and more typically at least 7 days.

According to a favourable embodiment, the method of performing a treatment of a particulate raw material is a method of reducing the water content of the particular material before thermal combustion of said particulate material as the thermal conversion.

The invention will now be illustrated with reference to the example section below.

1. MATERIALS AND CHEMICALS USED IN THE EXPERIMENTS:

Raw bulk materials

- Iron ore pellets (13 ± 1 mm) were supplied by Tata Steel, IJmuiden.
- Mo-I-Rana Iron Ore (fluffy powder, particle size up to 1 mm) was supplied by Tata Steel, IJmuiden.
- Casa de Pedra Iron Ore (particle size up to 1 mm, but with aggregates of up to 20 mm) was supplied by Tata Steel, IJmuiden.
- CDN Blend Coal (coarse granulate, particle size up to 50 mm) was supplied by Tata Steel, IJmuiden.

Raw bulk material as a model for ore

- Sandbox sand was from Decor Handelsmij B.V., Son, the Netherlands.

Materials for treatment

- Vivamelt S52, a wax being 39.3 % isoparaffins and 60.7% n-paraffins (solidification point 52°C) (LANGE Industrievertretung e.K., Cologne, Germany).
- Vivamelt S45, a wax being 15.5% isoparaffins and 84.5% n-paraffins (solidification point 45°C) (LANGE Industrievertretung e.K., Cologne, Germany) . Vivamelt S45 is not according to the claimed invention.
- Vivamelt S62, a wax being 67.7 % isoparaffins and 32.3% n-paraffins (solidification point 62°C) (LANGE Industrievertretung e.K., Cologne, Germany).
- Vivamelt S68, a wax being 82.7% isoparaffins and 17.7% n-paraffins (solidification point 68°C) (LANGE Industrievertretung e.K., Cologne, Germany).
- Vivamelt S7080, a wax being 89.6% isoparaffins and 10.4% n-paraffins (solidification point 72°C) (LANGE Industrievertretung e.K., Cologne, Germany).
- Vivashield 9562, a 50% emulsion of a wax in water (solidification point 62°C), the wax being 67.7 % isoparaffins and 32.3% n-paraffins (H&R Benelux, Nuth, the Netherlands).
- Vivashield 9568, a 50% emulsion of a wax in water (solidification point 68°C), the wax being 82.7% isoparaffins and 17.7% n-paraffins (H&R Benelux, Nuth, the Netherlands).
- Vivashield 99, a 50% emulsion of a wax in water (solidification point 72°C), the wax being 89.6% isoparaffins and 10.4% n-paraffins (H&R Benelux, Nuth, the Netherlands).

Solidification points were determined in accordance with DIN/ISO 2207: Petroleum waxes - Determination of congealing point.

Control materials for treatment

- Nodust, 50% solution of a mixture of lignosulfonic acid and its magnesium, calcium, ammonium and sodium salts in water (LignoStar International BV, Oldenzaal, The Netherlands)
- Neboplast VA 1050, a 65-68% vinylacetate homopolymer dispersion in water (NECARBO BV, Beverwijk, The Netherlands).
- Neboplast VA 1009, a 56-58% vinylacetate homopolymer dispersion in water (NECARBO BV, Beverwijk, The Netherlands).

5. PELLET TEST II

An amount of 2.25 kg iron ore pellets was heated to 150°C to simulate the conditions shortly after such iron ore pellets have been prepared and placed on a mechanical shaker. An amount of 4.5 g (2 kg/MT) coating (9 g = 4 kg/MT for the emulsions) was sprayed over the moving pellets using a spray bottle and each batch was left to dry and cool down for 2 hours under ambient conditions (20°C). Carefully weighed amounts of each batch ($W_p$) were transferred into transparent plastic graduated cylinders. of which the bottom had been punctured beforehand (empty weight = $W_{gc}$). The graduated cylinders containing the pellets were watered with 125 gram tap water after which they were left dripping for 1 hour. Then the whole cylinders were accurately weighed ($W_1$). The cylinders were left to rest at 20°C for at least 24 hours after which the whole watering procedure was repeated. The weight percentage of moisture present in the pellets can be calculated as: $100\% * ((W_1 - W_{gc} - W_p)/W_p)$. After 3071 hours the following results were obtained:

| Time (hours) | Untreated | Vivamelt S68 | Vivamelt S7080 | Vivashield 9568 | Vivashield 99 |
|---|---|---|---|---|---|
|  | Moisture (wt./wt. %) | Moisture (wt./wt. %) | Moisture (wt./wt. %) | Moisture (wt./wt. %) | Moisture (wt./wt. %) |
| 3071 | 9.8 | 7.9 | 8.0 | 7.5 | 7.5 |

It was found that paraffin emulsions are more convenient to apply and give better results than plain paraffins.

2. FUNNEL TEST

Plastic funnels (r = 4.5 cm; h = 8.5 cm; provided with a stopper in its stem) were filled to the rim with the following dry bulk raw materials:

- Mo-I-Rana Iron Ore

- Casa de Pedra Iron Ore

- CDN Blend Coal

- Sandbox sand

A beaker was placed onto the filled funnel and then the beaker with funnel were inverted. The funnel was removed to result in a cone-shaped mini-pile on top of the underside of the beaker.

The cone-shaped mini-piles (surface = 0,0136 m$^2$) thus carefully placed on beaker bottoms were coated with 13.6 gram (1 liter/m$^2$) of several coatings of liquid compositions (see table I below) using a spray bottle. The mini-piles were allowed to dry for three days at 20°C. Each beaker with mini-pile was in turn placed in a small tray and an amount of 20.0 gram of water was dripped on top of the pile using a pipette. The amount of water that rolled along the slope of the cone was collected in the tray and weighed afterwards. A mini-pile sprayed with plain water was used as a reference. The following results were obtained in the test:

Mo-I-Rana

| Coating | Water rolled down the slope (g) | Water rolled down the slope (%) |
|---|---|---|
| Water | 0 | 0 |
| Vivashicld 9562 (2% in water) | 19.8 | 99 |
| Vivashield 9568 (2% in water) | 19.6 | 98 |
| Vivashield 99 (2% in water) | 19.5 | 98 |
| Neboplast VA 1050 (2% in water) | 0.5 | 3 |
| Neboplast VA 1009 (2% in water) | 0.3 | 2 |
| Nodust (2% in water) | 2.0 | 10 |

**Casa de Pedra**

| Coating | Water rolled down the slope (g) | Water rolled down the slope (%) |
|---|---|---|
| Water | 0 | 0 |
| Vivashield 9562 (2% in water) | 19.6 | 98 |
| Vivashield 9568 (2% in water) | 19.0 | 95 |
| Vivashield 99 (2% in water) | 19.0 | 95 |
| Neboplast VA 1050 (2% in water) | 0 | 0 |
| Neboplast VA 1009 (2% in water) | 0 | 0 |
| Nodust (2% in water) | 0.5 | 3 |

**CDN Blend Coal**

| Coating | Water rolled down the slope (g) | Water rolled down the slope (%) |
|---|---|---|
| Water | 1.0 | 5 |
| Vivashield 9562 (2% in water) | 19.9 | 99 |
| Vivashield 9568 (2% in water) | 19.8 | 99 |
| Vivashield 99 (2% in water) | 19.8 | 99 |
| Neboplast VA 1050 (2% in water) | 2.0 | 10 |
| Neboplast VA 1009 (2% in water) | 1.7 | 9 |
| Nodust (2% in water) | 4.0 | 20 |

**Sandbox Sand**

| Coating | Water rolled down the slope (g) | Water rolled down the slope (%) |
|---|---|---|
| Water | 0 | 0 |
| Vivashield 9562 (2% in water) | 19.8 | 99 |
| Vivashield 9568 (2% in water) | 19.6 | 98 |
| Vivashield 99 (2% in water) | 19.5 | 98 |
| Neboplast VA 1050 (2% in water) | 1.0 | 5 |
| Neboplast VA 1009 (2% in water) | 1.2 | 6 |
| Nodust (2% in water) | 1.5 | 8 |

The tests show clearly that the paraffin emulsions produce a protective layer that strongly repels water. It also showed that sandbox sand was suitable as a model for metal ores in further experiments.

4. PELLET TEST I

Iron ore pellets sometimes have to be stored outside in the open for several months. These pellets can take up to 10% of moisture due to their porous structure and because they contain bentonite as a binder, which is also capable of absorbing water. Absorption of water causes the bentonite to swell, resulting in an undesirable reduction in the mechanical strength and increased porousness of the pellets.

An amount of 2.25 kg iron ore pellets was heated to 150°C and placed on a mechanical shaker. An amount of 4.5 g (2 kg/MT, where MT is metric ton) coating was sprayed over the moving pellets using a spray bottle and each batch was left to dry and cool down for 2 hours under ambient conditions (20°C). Carefully weighed amounts of each batch ($W_p$) were transferred into transparent plastic graduated cylinders, of which the bottom had been punctured beforehand (empty weight = $W_{gc}$). The graduated cylinders containing pellets were watered with 125 gram tap water after which they were left dripping for 1 hour. Then the whole cylinders were accurately weighed ($W_1$). The cylinders were left to rest at 20°C for at least 24 hours after which the whole watering procedure was repeated. The weight percentage of moisture present in the pellets can be calculated as:

$$100\% \; * \; ((W_1 - W_{gc} - W_p)/W_p).$$

After 425 hours the following results were obtained:

| Time (hours) | Untreated | Vivamelt S45 | Vivamelt S68 | Vivamelt S7080 | Vivamelt S52 | Vivamelt S62 |
|---|---|---|---|---|---|---|
| | Moisture (wt./wt. %) | Moisture (wt./wt. %) | Moisture (wt./wt. %) | Moisture (wt./wt. %) | Moisture (wt./wt. %) | Moisture (wt./wt. %) |
| 0 | 0 | 0 | 0 | 0 | 0 | 0 |
| 1 | 5.4 | 3.7 | 2.6 | 3.9 | 3.1 | 3.2 |
| 90 | 4.2 | 3.0 | 2.0 | 3.1 | 2.5 | 2.8 |
| 91 | 6.5 | 5.2 | 3.5 | 4.5 | 4.1 | 4.1 |
| 114 | 5.8 | 5.0 | 3.4 | 4.3 | 3.9 | 3.9 |
| 115 | 7.4 | 6.4 | 4.5 | 5.4 | 5.1 | 5.1 |
| 137 | 6.3 | 5.7 | 4.4 | 4.7 | 4.9 | 4.6 |
| 138 | 7.4 | 6.8 | 5.4 | 5.8 | 6.0 | 5.6 |
| 161 | 6.6 | 6.1 | 5.0 | 5.0 | 5.5 | 5.1 |
| 162 | 7.6 | 7.0 | 5.9 | 6.0 | 6.4 | 6.1 |

(continued)

| Time (hours) | Untreated | Vivamelt S45 | Vivamelt S68 | Vivamelt S7080 | Vivamelt S52 | Vivamelt S62 |
|---|---|---|---|---|---|---|
| | Moisture (wt./wt. %) | Moisture (wt./wt. %) | Moisture (wt./wt. %) | Moisture (wt./wt. %) | Moisture (wt./wt. %) | Moisture (wt./wt. %) |
| 259 | 6.1 | 5.7 | 4.9 | 4.7 | 5.3 | 4.8 |
| 260 | 7.2 | 7.0 | 6.0 | 5.8 | 6.3 | 6.0 |
| 305 | 6.7 | 6.3 | 5.3 | 5.0 | 5.7 | 5.3 |
| 306 | 7.6 | 7.3 | 6.2 | 5.9 | 6.5 | 6.2 |
| 328 | 7.3 | 6.8 | 5.7 | 5.3 | 6.1 | 5.6 |
| 329 | 7.7 | 7.4 | 6.4 | 6.3 | 6.9 | 6.4 |
| 400 | 6.9 | 6.6 | 5.6 | 5.3 | 5.9 | 5.5 |
| 401 | 7.9 | 7.5 | 6.4 | 6.3 | 6.8 | 6.5 |
| 424 | 7.5 | 7.1 | 5.9 | 5.6 | 6.3 | 5.9 |
| 425 | 8.2 | 7.7 | 6.5 | 6.6 | 7.2 | 6.7 |

It should be noted that a considerable part of weight of the moisture measured for the samples treated with paraffin in accordance with the present invention can be contributed to water drops that lay on top of pellets or that are hanging between pellets. This water has not penetrated the pellets and can easily be shaken out of the cylinders. Nevertheless, the reduction of 1.7% moisture in these pellets would already give a significant reduction in energy costs. It was observed that less rust is formed, which means that energy is saved because rust has to be chemically reduced.

3. TRAY TEST

Plastic trays (surface area w x 1 = 10 x 17 = 170 cm$^2$) were filled with 400 grams sandbox sand as a model for particulate oxide ore and accurately weighed. Each sand surface was coated with 17.0 gram (1 1/m$^2$) of one of several coatings (all diluted until solutions in water with 8% dry matter were obtained) using a spray bottle. Each coating was tested in duplicate. Two sand trays were sprayed with plain water as a reference. The trays were allowed to dry for three days at 20°C. The trays were placed on a slope (45°) and each top half was watered with 130 gram water (32.5 mass/mass% relative to the sand). The bottom edges of all trays were pierced to help drain the excess of water. After watering, the trays were left dripping for one minute and again accurately weighed. The trays were allowed to dry in the fume cupboard at 20°C for two days and then again accurately weighed. The trays were once more placed on a slope (45°) and each top half was watered with this time 75 gram water (18.75 mass/mass% relative to the sand). After watering, the trays were left dripping for one minute and again accurately weighed. The following results were obtained in the test:

| Coating | 1$^{st}$ watering (wt./wt. %) | After 'Dry' period (wt./wt. %) | 2$^{nd}$ Watering (wt./wt. %) |
|---|---|---|---|
| Water | 31 ± 0 | 15 ± 3 | 28 ± 3 |
| Paper Pulp | 32 ± 0 | 15 ± 0 | 25 ± 1 |
| Nodust | 24 ± 1* | 10 ± 0* | 15 ± 1* |
| Neboplast VA 1050 | 29 ± 1 | 15 ± 2 | 24 ± 4* |
| VivaShield 9562 | 17 ± 1 | 7 ± 2 | 14 ± 2 |
| VivaShield 9568 | 18 ± 1 | 7 ± 1 | 13 ± 1 |
| VivaShield 99 | 18 ± 0 | 7 ± 3 | 13 ± 1 |
| *Coating destroyed and sand from the trays was carried away by the water. | | | |

The paraffin emulsions clearly give a significant reduction in water adsorption of the sand samples and the applied coating is water-resistant, which shows from the second watering. All other coatings were already substantially destructed after the first watering.

## 6. COMPARISON OF PLAIN PARAFFINS WITH PARAFFIN EMULSIONS

Plastic trays (surface area w x 1 = 10 x 17 = 170 cm$^2$) were filled with 400 grams of sandbox sand and accurately weighed. Each surface was coated with several coatings using a spray bottle. Each coating was tested in duplicate. Two sand trays were sprayed with plain water as a control. The trays were allowed to dry for three days at 20°C. The trays were placed on a slope (45°) and each top half was watered with 130 gram water (32.5 mass/mass% relative to the sand). The bottom edges of all trays were pierced to help drain the excess of water. After watering, the trays were left dripping for one minute and again accurately weighed. The trays were allowed to dry in the fume cupboard at 20°C for two days and then again accurately weighed. The trays were once more placed on a slope (45°) and each top half was watered with this time 75 gram water (18.75 mass/mass% relative to the sand). After watering, the trays were left dripping for one minute and again accurately weighed. The following results were obtained in the test:

| Coating | Dosage (g) | 1st watering (wt./wt. %) | After 'Dry' period (wt./wt. %) | 2nd Watering (wt./wt. %) |
|---|---|---|---|---|
| Water | 17.0 | 31 ± 1 | 17 ± 5 | 31 ± 3 |
| Vivamelt S62 | 1.5 | 18 ± 2 | 9 ± 0 | 12 ± 1 |
| VivaShield 9562 (16%) | 17.1 | 16 ± 0 | 9 ± 0 | 11 ± 1 |
| Vivamelt S68 | 1.4 | 18 ± 1 | 6 ± 1 | 13 ± 1 |
| VivaShield 9568 (16%) | 17.0 | 16 ± 1 | 7 ± 0 | 11 ± 1 |
| Vivamelt S7080 | 1.5 | 20 ± 2 | 9 ± 2 | 20 ± 3 |
| VivaShield 99 (16%) | 17.1 | 18 ± 1 | 6 ± 1 | 14 ± 1 |

Paraffin emulsions were found to be more convenient to apply, which is relevant for outdoor areas. The results in this experiment show that paraffin emulsions perform better than plain paraffins.

## 7. DETERMINATION OF A SUITABLE CONCENTRATION

Plastic trays (surface w x 1 = 10 x 17 = 170 cm$^2$) were filled with 400 grams sandbox sand and accurately weighed. Each surface was coated with 17.0 gram (1 l/m$^2$) of several coatings (all diluted until the required solutions in water were obtained) using a spray bottle. Each coating was tested in duplicate. Two sand trays were sprayed with plain water as a reference. The trays were allowed to dry for three days at 20°C. The trays were placed on a slope (45°) and each top half was watered with 130 gram water (32.5 mass/mass% with respect to the sand). The bottom edges of all trays were pierced to help drain the excess of water. After watering, the trays were left dripping for one minute and again accurately weighed. The trays were allowed to dry in the fume cupboard at 20°C for two days and then again accurately weighed. The trays were once more placed on a slope (45°) and each top half was watered with this time 75 gram water (18.75 mass/mass% with respect to the sand). After watering, the trays were left dripping for one minute and again accurately weighed. The following results were obtained in the test:

| Coating | 1st watering (wt./wt. %) | After 'Dry' period (wt./wt. %) | 2nd Watering (wt./wt. %) |
|---|---|---|---|
| Water | 32 ± 0 | 17 ± 4 | 31 ± 1 |
| VivaShield 9568 (32%) | 12 ± 0 | 4 ± 0 | 11 ± 1 |
| VivaShield 9568 (16%) | 17 ± 0 | 7 ± 0 | 11 ± 1 |
| VivaShield 9568 (8%) | 18 ± 1 | 6 ± 1 | 13 ± 1 |
| VivaShield 9568 (4%) | 18 ± 2 | 7 ± 2 | 14 ± 4 |
| VivaShield 9568 (2%) | 20 ± 2 | 9 ± 2 | 24 ± 3 |
| VivaShield 9568 (1%) | 20 ± 1 | 13 ± 1 | 24 ± 1 |

(continued)

| Coating | 1st watering (wt./wt. %) | After 'Dry' period (wt./wt. %) | 2nd Watering (wt./wt. %) |
|---|---|---|---|
| VivaShield 9568 (0.5%) | 23 ± 1 | 14 ± 1 | 27 ± 1 |
| VivaShield 9568 (0.25%) | 25 ± 1 | 15 ± 1 | 27 ± 1 |
| VivaShield 9568 (0.125%) | 30 ± 2 | 16 ± 2 | 29 ± 1 |

The results show that the more paraffin or paraffin emulsion is applied, the better the water repellency will become. Even low concentrations have a positive effect, something that is relevant if raw material particles are coated where the particles are relatively small and hence have a relatively large surface area.

8. PARAFFIN TYPE TEST

An amount of 1.0 kg iron ore pellets was heated to 150°C and placed on a mechanical shaker. An amount of 2.0 ± 0.1 g (2 kg/MT) coating was sprayed over the moving pellets using a spray bottle and each batch was left to dry and cool down for 2 hours at ambient conditions (20°C). An amount of 100 ± 2 g coated ore pellets was transferred into a glass funnel. The pellets in the funnel were watered with exactly 100 gram demineralized water after which the funnel was shaken and left dripping for 5 minutes. Then the pellets were accurately weighed. The pellets were left to rest single layered in a petri dish at 20°C for 24 hours and again weighed. The ore was returned from the petri dish to the funnel, and the procedure of watering and weighing was repeated for four more times. All samples were tested in duplicate to give the following results:

| Water Addition | Untreated | VVM S45 | VVM S52 | VVM S62 | VVM S68 | VVM S7080 |
|---|---|---|---|---|---|---|
| | Moisture Content (w./wt. %) | | | | | |
| 0 | 6.6 ± 0.1 | 0.4 ± 0 | 0.6 ± 0.2 | 0.7 ± 0.1 | 0.9 ± 0.3 | 0.9 ± 0.2 |
| 1a | 1.0 ± 0.2 | 0.2 ± 0.1 | 0.1 ± 0.1 | 0 | 0 | 0 |
| 1b | 7.0 ± 0.1 | 0 | 0.9 ± 0.2 | 0.9 ± 0.2 | 1 | 1.1 ± 0.1 |
| 2a | 0.9 ± 0.2 | 0.2 ± 0 | 0.2 ± 0 | 0.2 ± 0 | 0 | 0 |
| 2b | 7.1 ± 0.1 | 0.9 ± 0 | 1.0 ± 0.1 | 1.1 ± 0.2 | 1.0 ± 0.1 | 1.1 ± 0.1 |
| 3a | 1.3 + 0.2 | 0.4 ± 0.2 | 0.4 ± 0.3 | 0.4 ± 0.2 | 0.1 ± 0.1 | 0 |
| 3b | 7.0 ± 0.1 | 1.1 ± 0.4 | 1.1 ± 0.1 | 1.3 ± 0 | 1.0 ± 0.1 | 1.1 ± 0.1 |
| 4a | 1.0 ± 0.1 | 0.8 ± 0.2 | 0.8 ± 0 | 0.5 ± 0.2 | 0.1 ± 0.1 | 0.2 ± 0.1 |
| 4b | 7.2 ± 0.1 | 1.3 ± 0 | 1.3 ± 0 | 1.2 ± 0.2 | 1.0 ± 0.2 | 1.1 ± 0.1 |
| 5a | 1.1 ± 0.2 | 1.0 ± 0 | 1.0 ± 0.1 | 0.7 ± 0.2 | 0.1 ± 0.1 | 0.1 ± 0.1 |

Even though the paraffins with the highest amount of n-paraffins work better as water repellent coating, they gave a lower performance in preventing the iron ore pellets to absorb water as paraffin mixtures with a far lower content of n-paraffins. Since paraffin mixtures with high amount of n-paraffins are both impermeable for water as well as water vapor, it is our hypothesis that it acts as a barrier for the amount of water that still was able to penetrate the pellets and that it prevents this water to evaporate from the pellets during the 'dry period'. Untreated pellets absorb a far higher quantity of water, which can however freely evaporate during the 'dry period'. The capacity to do so in a stockpile is however limited. With a paraffin coating comprising a relatively low n-paraffin content, the little water that is absorbed will be able to leave the stockpile.

The present invention, relying on the use of paraffin, is environmentally friendly because of its low toxicity.

## Claims

**1.**   A method of performing a treatment of a particulate raw material capable of being thermally converted at a temperature of > 100°C, said treatment comprising depositing a liquid composition on the raw material, said liquid composition comprising a hydrocarbon;
wherein the liquid composition comprises paraffin

- having a carbon chain length between 18 and 70 carbon atoms, and
- a solidification point between 15 and 90°C ; **characterized in that** the paraffin comprises more than 20% by wt./wt. of iso-paraffins, and preferably more than 30% by wt./wt.

2. The method according to claim 1, wherein the solidification point of the paraffin at least 45°C.

3. The method according to claim 1 or 2, wherein the particulate raw material is chosen from a metal ore and coal.

4. The method according to any of the preceding claims, wherein the liquid composition is a paraffin emulsion.

5. The method according to any of the preceding claims, wherein the particulate raw material is treated with the liquid composition while moving under the influence of gravity.

6. The method according to claim 5, wherein the particulate raw material is treated with the liquid composition while moving in a gas-dispersed state under the influence of gravity.

7. The method according to claims 1-4, wherein the raw material is a stockpile, the top surface of which is treated with the liquid composition.

8. The method according to claim 7, wherein the liquid composition comprises paper pulp.

9. The method according to claims 1-8, wherein the paraffin comprises more than 65% by wt./wt. of iso-paraffins, and preferably more than 75% by wt./wt.

10. The method according to any of the preceding claims, wherein the treatment is followed by a step of thermally converting the raw material at a temperature of > 100°C.

11. The method according to claim 10, wherein the method of performing a treatment of a particulate raw material is a method of reducing the water content of the particular material before thermal combustion of said particulate material as the thermal conversion.

**Patentansprüche**

1. Verfahren zur Durchführung einer Behandlung eines teilchenförmigen Rohmaterials, das bei einer Temperatur von > 100°C thermisch umgewandelt werden kann, wobei die Behandlung das Abscheiden einer flüssigen Zusammensetzung auf dem Rohmaterial umfasst, wobei die flüssige Zusammensetzung einen Kohlenwasserstoff umfasst; wobei die flüssige Zusammensetzung Paraffin

- mit einer Kohlenstoffkettenlänge zwischen 18 und 70 Kohlenstoffatomen und
- einem Erstarrungspunkt zwischen 15 und 90°C umfasst;

**dadurch gekennzeichnet, dass** das Paraffin mehr als 20 Gew.-% Iso-Paraffine und vorzugsweise mehr als 30 Gew.-% Iso-Paraffine umfasst.

2. Verfahren nach Anspruch 1, wobei der Erstarrungspunkt des Paraffins mindestens 45°C.

3. Verfahren nach Anspruch 1 oder 2, wobei das teilchenförmige Rohmaterial aus einem Metallerz und Kohle ausgewählt wird.

4. Verfahren nach einem der vorhergehenden Ansprüche, wobei die flüssige Zusammensetzung eine Paraffinemulsion ist.

5. Verfahren nach einem der vorhergehenden Ansprüche, wobei das teilchenförmige Rohmaterial mit der flüssigen Zusammensetzung behandelt wird, während es sich unter dem Einfluss der Schwerkraft bewegt.

**6.** Verfahren nach Anspruch 5, wobei das teilchenförmige Rohmaterial mit der flüssigen Zusammensetzung behandelt wird, während es sich in einem gasdispergierten Zustand unter dem Einfluss der Schwerkraft bewegt.

**7.** Verfahren nach den Ansprüchen 1-4, wobei das Rohmaterial ein Vorrat ist, dessen Oberseite mit der flüssigen Zusammensetzung behandelt wird.

**8.** Verfahren nach Anspruch 7, wobei die flüssige Zusammensetzung Papierzellstoff umfasst.

**9.** Verfahren nach den Ansprüchen 1-8, wobei das Paraffin mehr als 65 Gew.-% Iso-Paraffine und vorzugsweise mehr als 75 Gew.-% Iso-Paraffine umfasst.

**10.** Verfahren nach einem der vorhergehenden Ansprüche, wobei sich an die Behandlung ein Schritt der thermischen Umwandlung des Rohmaterials bei einer Temperatur von > 100°C anschließt.

**11.** Verfahren nach Anspruch 10, wobei das Verfahren zur Durchführung einer Behandlung eines teilchenförmigen Rohmaterials ein Verfahren zur Reduzierung des Wassergehalts des jeweiligen Materials vor der thermischen Verbrennung des teilchenförmigen Materials als thermische Umwandlung ist.

## Revendications

**1.** Procédé de mise en œuvre d'un traitement d'une matière première particulaire capable d'être soumise à une conversion thermique à une température supérieure à 100 °C, ledit traitement comprenant le fait de déposer une composition liquide sur la matière première, ladite composition liquide comprenant un hydrocarbure ; dans lequel la composition liquide comprend de la paraffine qui possède :

- une longueur de chaîne carbonée entre 18 et 70 atomes de carbone ; et
- un point de solidification entre 15 et 90 °C ;

**caractérisé en ce que** la paraffine comprend des isoparaffines à concurrence de plus de 20 % en poids/poids et de préférence à concurrence de plus de 30 % en poids/poids.

**2.** Procédé selon la revendication 1, dans lequel le point de solidification de la paraffine s'élève à au moins 45 °C.

**3.** Procédé selon la revendication 1 ou 2, dans lequel la matière première particulaire est choisie parmi un minerai de métal et du charbon.

**4.** Procédé selon l'une quelconque des revendications précédentes, dans lequel la composition liquide représente une émulsion de paraffine.

**5.** Procédé selon l'une quelconque des revendications précédentes, dans lequel la matière première particulaire est traitée avec la composition liquide lors de sa mise en mouvement sous l'influence de la pesanteur.

**6.** Procédé selon la revendication 5, dans lequel la matière première particulaire est traitée avec la composition liquide lors de sa mise en mouvement dans un état dispersé par un gaz sous l'influence de la pesanteur.

**7.** Procédé selon l'une quelconque des revendications 1 à 4, dans lequel la matière première est un dépôt en tas dont la surface supérieure est traitée avec la composition liquide.

**8.** Procédé selon la revendication 7, dans lequel la composition liquide comprend de la pâte à papier.

**9.** Procédé selon l'une quelconque des revendications 1 à 8, dans lequel la paraffine comprend des isoparaffines à concurrence de plus de 65 % en poids/poids et de préférence à concurrence de plus de 75 % en poids/poids.

**10.** Procédé selon l'une quelconque des revendications précédentes, dans lequel le traitement est suivi d'une étape de conversion thermique de la matière première à une température supérieure à 100 °C.

**11.** Procédé selon la revendication 10, dans lequel le procédé de mise en œuvre d'un traitement d'une matière première particulaire représente un procédé de réduction de la teneur en eau de la matière particulaire avant une combustion thermique de ladite matière particulaire à titre de conversion thermique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2204781 A

- WO 8705226 A1